# FASCICULE DE BREVET EUROPEEN

(11) **EP 3 053 305 B1**
(45) Date de publication et mention de la délivrance du brevet: **15.05.2024**
(21) Numéro de dépôt: 14796199.9
(22) Date de dépôt: 25.09.2014
(51) Int. Cl.: H04L 41/046

(54) **PROCÉDÉ D'ADMINISTRATION D'UNE PLURALITÉ D'ÉQUIPEMENTS LOCAUX**
VERFAHREN ZUM VERWALTEN MEHRERER LOKALER VORRICHTUNGEN
METHOD FOR ADMINISTERING A PLURALITY OF LOCAL DEVICES

(30) Priorité: 30.09.2013 FR 1359445
(43) Date de publication de la demande: 10.08.2016
(73) Titulaire: Orange, 92130 Issy-les-Moulineaux (FR)
(72) Inventeur: OULAHAL, Nordine, F-38100 Grenoble (FR); OTT, Jean-Didier, F-38920 Crolles (FR)
(74) Mandataire: Regimbeau
(86) Numéro de dépôt international: PCT/FR2014/052410
(87) Numéro de publication internationale: WO 2015/044600

(56) Documents cités:
- WO-A1-2013/029507
- CN-A- 101 808 024
- TIAGO CRUZ ET AL: "How to provision and manage off-the-shelf SIP phones in domestic and SOHO environments", LOCAL COMPUTER NETWORKS (LCN), 2011 IEEE 36TH CONFERENCE ON, IEEE, 4 octobre 2011 (2011-10-04), pages 42-49, XP032081732, DOI: 10.1109/LCN.2011.6115389 ISBN: 978-1-61284-926-3

## Description

### DOMAINE TECHNIQUE GENERAL

L'invention a pour objet l'administration à distance des équipements d'un réseau local.

Elle concerne plus particulièrement l'administration à distance de tels équipements par un équipement de configuration, tel qu'un serveur d'auto configuration ACS (Auto Configuration Server), au travers d'un équipement du réseau local supportant le rôle d'équipement de configuration local.

### ETAT DE LA TECHNIQUE

Les réseaux domestiques actuels comprennent un nombre croissant d'équipements connectés (ou CPE pour « Customer Premise Equipment »), proposant de plus en plus de services accessibles depuis l'extérieur du réseau domestique, par exemple pour des applications de domotique, de diffusion de contenu multimedia, etc. Il est donc nécessaire de pouvoir disposer d'une solution efficace d'administration à distance de tels équipements d'un réseau domestique. L'opérateur du réseau auquel un tel réseau domestique est connecté doit notamment pouvoir détecter les équipements du réseau domestique, superviser leur fonctionnement et mesurer leurs performances, diagnostiquer d'éventuels dysfonctionnements, mettre à jour les logiciels embarqués par ces équipements et installer et configurer de nouveaux services.

Le protocole CWMP (« CPE WAN Managment Protocol ») défini par le rapport technique TR-069 du Broadband Forum permet d'administrer l'ensemble des équipements connectés d'un réseau domestique à distance. Il propose en effet des mécanismes permettant la configuration automatique de tels équipements et leur gestion par le biais d'un serveur d'autoconfiguration ACS (« Auto Configuration Server »). Le protocole permet notamment de mettre à jour les logiciels embarqués sur ces équipements, de mesurer leurs performances et de diagnostiquer les pannes.

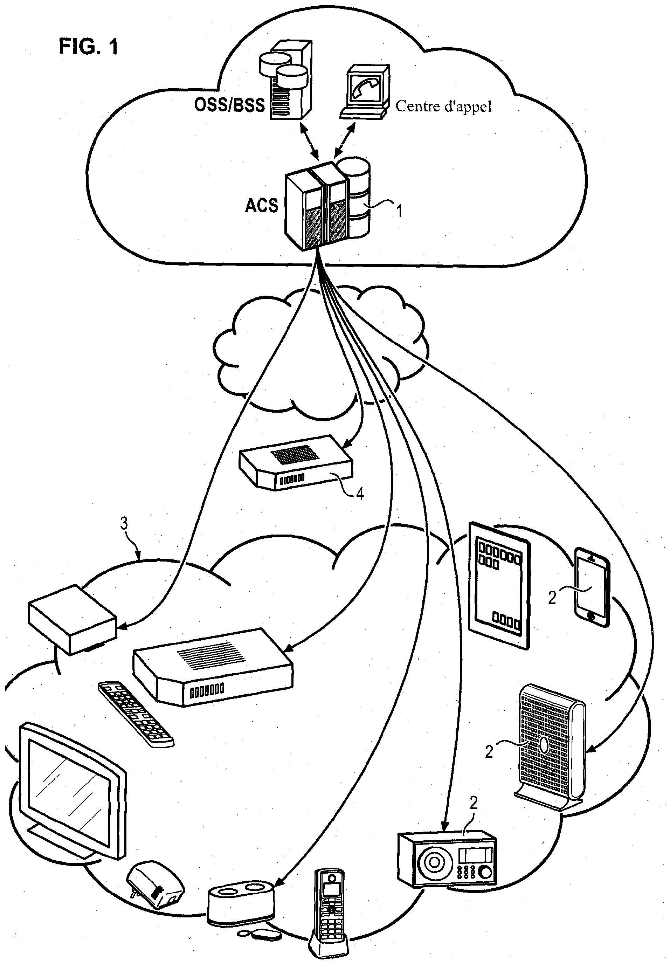

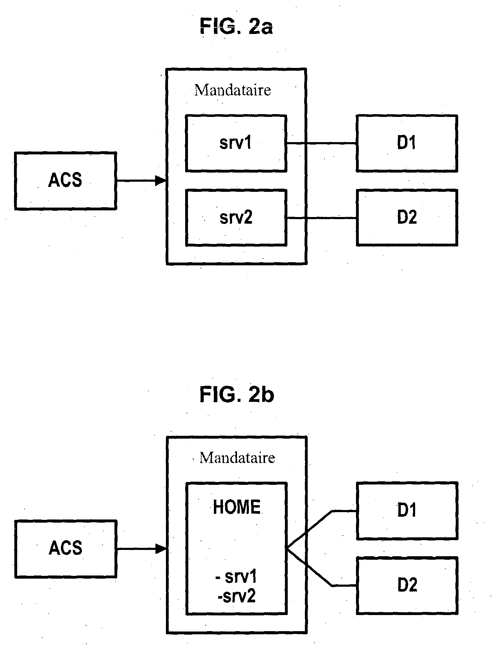

Le serveur ACS 1 accède usuellement aux équipements 2 d'un réseau domestique 3 au-travers de la passerelle 4 du réseau domestique 3 comme représenté en Figure 1. Cette passerelle, ou un autre équipement du réseau domestique, peut jouer le rôle de mandataire (« proxy » en anglais) pour le protocole CWMP entre le serveur ACS 1 et certains des équipements du réseau domestique. Une telle approche permet par exemple d'administrer à partir du serveur ACS des équipements qui ne supportent pas nativement le protocole CWMP mais un autre protocole de gestion, tel que le protocole UPnP DM (« Universal Plug and Play Device Management»). Le modèle dit d' « embedded device » peut notamment être utilisé pour représenter un équipement 2 (D1) du réseau domestique 3 vis-à-vis du serveur ACS 1 par le service (srv1) qu'il peut rendre tel que représenté en **Figure 2a****.**

Néanmoins, l'administration par un serveur ACS selon le protocole CWMP d'un réseau domestique moderne comprenant un nombre important d'équipements connectés de manière intermittente, utilisés avec une fréquence variable, parfois utilisés de manière conjointe pour l'exécution d'un unique service et pour autant non nécessairement dotés de fonctions d'administration avancées, nécessite pour être efficace l'installation d'un environnement logiciel complexe aussi bien sur le serveur ACS lui-même que sur les équipements du réseau domestique, dont notamment la passerelle de ce réseau.

Ainsi, la mise à jour du microcode (« firmware ») d'un équipement sans provoquer de gêne pour l'utilisateur nécessite l'installation d'un logiciel implémentant des fonctions optionnelles du protocole CWMP sur cet équipement, telles que la fonction « ScheduleDownload » pour le téléchargement du nouveau microcode à installer. De même, l'accès en temps réel aux équipements 2 du réseau domestique 3 par le serveur ACS 1 au travers de la passerelle 4 du réseau nécessite l'installation de fonctions spécifiques sur ces équipements 2 et sur la passerelle 4 ou bien la mise en place d'une architecture complexe basée sur des protocoles comme STUN (pour « Simple Traversal of UDP through NATs ») ou XMPP (pour « Extensible Messaging and Presence Protocol ») par exemple. De façon similaire, la configuration de services exécutés en parallèle ou en alternance sur plusieurs équipements du réseau domestique de natures variées nécessite la programmation de comportements complexes, spécifiques à chaque service, sur le serveur ACS 1 et la connaissance détaillée par le serveur ACS 1 de la structure du réseau domestique 3.
- En outre, le document "TIAGO CRUZ ET AL: "How to provision and manage off-the-shelf SIP phones in domestic and SOHO environments",LOCAL COMPUTER NETWORKS (LCN), 2011 IEEE 36TH CONFERENCE ON, IEEE, 4 octobre 2011 (2011-10-04), pages 42-49", décrit un procédé de configuration à distance d'équipements d'un réseau local dans lequel une passerelle du réseau domestique comprend un module jouant le rôle de serveur proxy entre un serveur ACS distant et les équipements du réseau local à configurer non compatibles nativement avec CWMP.

Il existe donc un besoin d'une solution d'administration à distance d'un réseau local par un serveur ACS qui soit complète et efficace et ne nécessite pas la programmation de fonctions additionnelles à celles du protocole CWMP ni sur le serveur ACS ni sur chacun des équipements du réseau domestique à administrer.

### PRESENTATION DE L'INVENTION

L'invention concerne ainsi selon un premier aspect un procédé d'administration d'une pluralité d'équipements locaux connectés à un réseau de communication local suivant la revendication 1.

Une telle solution permet à l'équipement de configuration distant ACS d'administrer l'ensemble des équipements locaux du réseau de communication local sans avoir à se connecter à chacun d'eux au travers de la passerelle d'accès au réseau local. De plus, cette solution permet de ne pas avoir à implémenter de logique complexe de commande dans l'équipement de configuration distant même lorsque différents équipements locaux doivent coopérer pour l'exécution d'un service. Cette solution permet également de diminuer la charge de l'équipement de configuration distant lorsque le réseau local comprend plusieurs équipements d'un même type.

L'utilisation d'un tel modèle permet d'exposer à l'équipement de configuration distant ACS les actes d'administration de services pouvant être exécutés sur l'ensemble du réseau de communication local et les paramètres associés, sous la forme d'une structure connue de l'équipement de configuration distant puisque conforme au standard CWMP, sans avoir besoin d'exposer à l'équipement de configuration distant le détail des équipements locaux composant le réseau local et participant à l'exécution de ces actes d'administration.

Suivant le mode de réalisation de la revendication 2, l'équipement de configuration local LACS associe un microcode (« firmware ») à chaque équipement local du réseau de communication local.

Ceci lui permet, lors de la mise à jour d'un microcode, de déterminer quels équipements locaux embarquant ce microcode sont concernés par cette mise à jour.

Suivant le mode de réalisation de la revendication 3, lors de la connexion au réseau de communication local d'un nouvel équipement local susceptible d'être impliqué dans l'exécution d'au moins un acte d'administration, ledit équipement de configuration local LACS met à jour le modèle du réseau de communication local pour permettre à l'équipement de configuration distant ACS de disposer d'une mise à jour des actes d'administration des services susceptibles d'être exécutés sur le réseau de communication local et des paramètres associés.

Le modèle du réseau local est ainsi maintenu à jour ce qui permet à l'équipement de configuration distant d'avoir connaissance des nouveaux actes d'administrations disponibles et paramètres liés à la présence du nouvel équipement local, sans avoir besoin de déclarer à l'équipement de configuration distant l'ajout dudit nouvel équipement local dans le réseau de communication local.

Suivant le mode de réalisation de la revendication 4, l'exécution de l'acte d'administration déclenche une installation ou une mise à jour d'un logiciel (« software ») ou d'un microcode (« firmware »), une configuration d'un service, un suivi de l'état des performances et/ou un diagnostic d'une panne d'un ou plusieurs équipements locaux du réseau de communication local.

L'utilisation d'un équipement de configuration local et d'un modèle global du réseau local dans un tel contexte d'utilisation permet à l'équipement de configuration distant de commander un tel acte d'administration dans l'ensemble du réseau local sans avoir à multiplier les connexions et les commandes puisqu'il n'interagit qu'avec l'équipement de configuration local selon les commandes globales du modèle du réseau. De plus, la solution proposée permet également à l'équipement de configuration distant de toujours disposer d'une vision globale de l'état de chaque service puisque l'équipement de configuration local peut fournir une telle information même lorsque d'autres équipements locaux du réseau de communication local sont éteints ou injoignables.

Suivant le mode de réalisation de la revendication 5, lorsque l'acte d'administration d'un service est une commande d'installation ou de mise à jour d'un logiciel ou d'un microcode sur le réseau de communication local, ledit équipement de configuration local LACS télécharge ledit logiciel ou ledit microcode, et ladite au moins une commande d'administration nécessaire à l'exécution dudit acte d'administration comprend une commande de téléchargement à partir dudit équipement de configuration local et d'installation dudit logiciel ou dudit microcode, transmise aux équipements locaux sur lesquels l'installation ou la mise à jour dudit logiciel ou dudit microcode est requise.

Ceci permet de ne réaliser qu'un seul téléchargement vers le réseau local, diminuant la bande passante consommée par l'ensemble des équipements locaux. De plus, le téléchargement dudit logiciel ou dudit microcode par les équipements locaux peut être réalisé lorsque ceux-ci disposent de la bande passante requise ou hors de périodes d'utilisation de ces équipements afin de réaliser des mises à jour sans gêner les utilisateurs.

Suivant le mode de réalisation de la revendication 6, lorsque l'acte d'administration d'un service est une commande de configuration d'un service, ladite au moins une commande d'administration nécessaire à l'exécution dudit acte d'administration est une commande d'administration configurant ledit service sur les équipements locaux de la liste déterminée.

La présence de l'équipement de configuration local décharge l'équipement de configuration distant et lui permet de n'avoir qu'un seul interlocuteur tout en limitant le nombre d'échanges pour réaliser une telle configuration d'un service sur le réseau de communication local. De plus, la transmission aux équipements locaux des commandes d'administration peut être faite de manière désynchronisée et différée de façon à ce que l'exécution de ces commandes intervienne au moment le plus opportun, par exemple pour ne pas perturber l'utilisateur du réseau local.

Suivant le mode de réalisation de la revendication 7, la connexion entre l'équipement de configuration local LACS et l'équipement de configuration distant ACS est sécurisée.

L'utilisation d'un équipement de configuration local disposant de suffisamment de ressources pour mettre en oeuvre un tel mécanisme de sécurité permet de sécuriser l'ensemble des communications entre l'équipement de configuration distant et le réseau de communication local, ce qui n'est pas toujours possible lorsque l'équipement de configuration distant dialogue directement avec des équipements locaux parfois incapables de mettre en oeuvre un quelconque mécanisme de sécurité.

Suivant le mode de réalisation de la revendication 8, l'équipement de configuration local LACS est intégré dans une passerelle du réseau de communication local.

Ceci permet à l'équipement de configuration local d'être naturellement connecté à l'ensemble des équipements locaux, de disposer d'une puissance de traitement suffisante et de rester en fonctionnement en permanence.

Selon un deuxième aspect, l'invention concerne un produit programme d'ordinateur comprenant des instructions de code pour l'exécution d'un procédé d'administration d'une pluralité d'équipements locaux selon le premier aspect lorsque ce programme est exécuté par un processeur suivant la revendication 9.

Selon un troisième aspect, l'invention concerne un équipement de configuration local LACS apte à être connecté à un réseau de communication local et à un équipement de configuration distant ACS suivant la revendication 10.

Selon un quatrième aspect, l'invention concerne une passerelle apte à être connectée à un réseau de communication local et comprenant un équipement de configuration local LACS selon le troisième aspect, suivant la revendication 11.

De tels produit programme d'ordinateur, équipement de configuration local et passerelle présentent les mêmes avantages que ceux évoqués pour le procédé selon le premier aspect.

### PRESENTATION DES FIGURES

D'autres caractéristiques et avantages de la présente invention apparaîtront à la lecture de la description qui va suivre d'un mode de réalisation de l'invention. Cette description sera donnée en référence aux dessins annexés dans lesquels :
- la figure 1 représente un exemple d'architecture pour la mise en oeuvre d'un procédé d'administration selon l'état de la technique ;
- les figures 2a et 2b représentent un modèle de mandataire (« proxy ») selon un mécanisme d'« embedded device » selon l'état de la technique et un modèle d'équipement de configuration local selon un mode de réalisation de l'invention ;
- la figure 3 représente un exemple d'architecture pour la mise en oeuvre d'un procédé d'administration selon un mode de réalisation de l'invention ;
- les figures 4a et 4b sont des diagrammes schématisant un premier exemple de mise en oeuvre d'un procédé d'administration selon l'état de la technique et un mode de réalisation de l'invention;
- les figures 5a et 5b sont des diagrammes schématisant un deuxième exemple de mise en oeuvre d'un procédé d'administration selon l'état de la technique et un mode de réalisation de l'invention;
- les figures 6a et 6b schématisent un troisième exemple de mise en oeuvre d'un procédé d'administration selon l'état de la technique et un mode de réalisation de l'invention.

### DESCRIPTION DETAILLEE

### Architecture

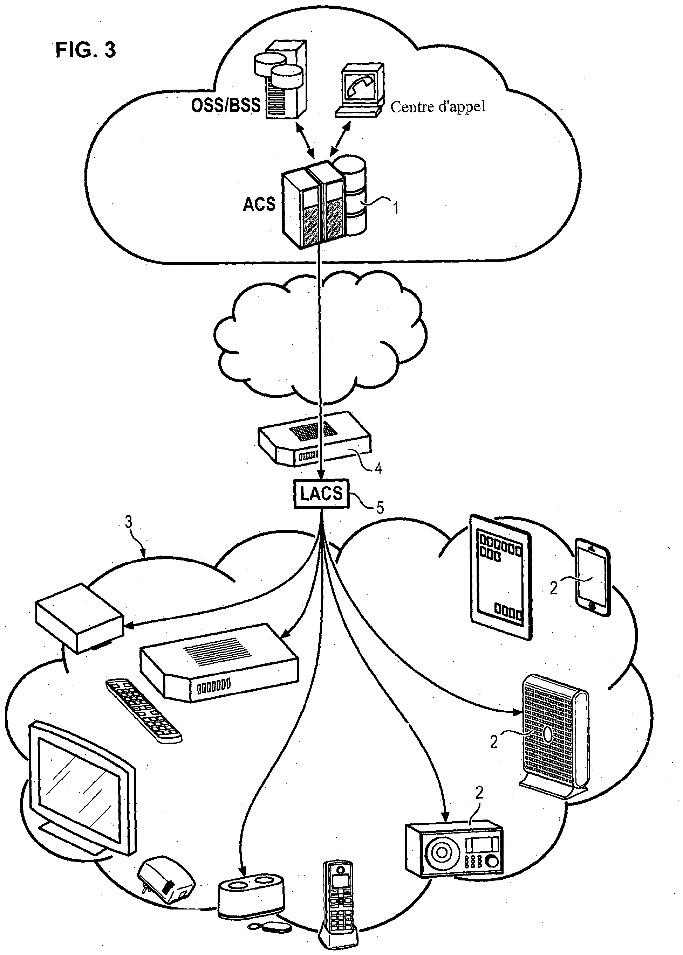

En référence à la **Figure 3**, un mode de mise en oeuvre de l'invention concerne un procédé d'administration d'une pluralité d'équipements locaux 2 connectés à un réseau de communication local 3.

Par réseau de communication local 3, on entend un réseau de type LAN (« Local Access Network»). Ce réseau peut être en particulier un réseau domestique ou un réseau d'entreprise, et est le plus souvent centré sur une passerelle 4 d'accès au réseau local, qui est en particulier un boitier d'accès à Internet (une « box ») du foyer ou de l'entreprise.

Le réseau 3 peut être aussi bien un réseau filaire de type Ethernet, selon la norme IEEE 802.3, qu'un réseau sans fil de type Wi-Fi, selon la norme IEEE 802.11, qu'un réseau hybride selon la norme P1905 ou 3G ou bien une combinaison des précédents réseaux. La liaison peut être directe, ou utiliser un équipement intermédiaire tel que des boitiers CPL.

Les équipements locaux 2 peuvent être n'importe quels équipements, en particulier domestiques, disposant d'une connexion réseau filaire ou sans-fil. Par exemple, ces équipements peuvent être des ordinateurs, un boitier multimédia (« Set-Top Box »), une passerelle, une tablette tactile, des consoles, des téléphones intelligents (ou « smartphone » en anglais), de l'électroménager, etc.

L'administration des équipements locaux 2 du réseau de communication local 3 est réalisée par un équipement de configuration distant 1, situé en dehors de celui-ci et connecté au réseau de communication local par l'intermédiaire de la passerelle 4. L'équipement de configuration distant est un serveur de type ACS (« Auto Configuration Server »), dialoguant avec le réseau local pour sa configuration selon le protocole de gestion à distance CWMP (« CPE WAN Management Protocol ») défini par le rapport technique TR-069 du Broadband Forum. Le serveur 1 utilise le protocole CWMP pour obtenir et gérer l'état du réseau local, initier des tests de diagnostics, télécharger des fichiers et gérer des événements.

Ce procédé se distingue des procédés connus en ce que l'administration des équipements locaux 2 du réseau de communication local 3 est mise en oeuvre au niveau local par un équipement de configuration local LACS 5 apte à être connecté d'une part au réseau de communication local 3 et d'autre part à l'équipement de configuration distant ACS 1.

L'équipement de configuration local 5 peut consister en un équipement dédié du réseau de communication local 3, ou bien être intégré dans un des équipements 2 du réseau local 3, en particulier dans la passerelle 4 du réseau. La passerelle est par définition le coeur d'un réseau de communication local. Tous les autres équipements du réseau lui sont reliés et elle échange déjà des messages avec ces équipements de par sa fonction de routage. Cet équipement est en effet celui qui contrôle le réseau, et a donc naturellement une position de coordinateur. De plus, il est bien moins souvent éteint que les autres (car il assure souvent la connectivité au réseau Internet 24h/24). Elle dispose par ailleurs généralement de moyens de traitement suffisants pour réaliser les opérations effectuées par l'équipement de configuration local LACS. Elle est ainsi particulièrement adaptée pour administrer les autres équipements du réseau local.

L'équipement de configuration local 5 est adapté pour être l'unique interlocuteur de l'équipement de configuration distant ACS 1 pour la configuration du réseau local 3. L'équipement de configuration distant ACS 1 n'est jamais en communication directe avec les autres équipements locaux 2 du réseau local 3 et n'a pas même connaissance de la structure du réseau local et de l'existence des équipements locaux 2 du réseau local.

La connexion entre l'équipement de configuration local 5 LACS et l'équipement de configuration distant 1 ACS peut être sécurisée à l'aide de mécanismes de sécurité, notamment prévus par le protocole CWMP, par exemple à l'aide du protocole HTTPS. L'utilisation d'un équipement de configuration local 5 disposant de suffisamment de ressources pour mettre en oeuvre un tel mécanisme de sécurité permet de sécuriser l'ensemble des communications entre l'équipement de configuration distant 1 et le réseau de communication local 3, ce qui n'est pas toujours possible lorsque l'équipement de configuration distant dialogue directement avec des équipements locaux parfois incapables de mettre en oeuvre un quelconque mécanisme de sécurité.

Pour permettre à l'équipement de configuration distant 1 d'administrer le réseau local 3 sans être directement connecté aux équipements locaux du réseau local, l'équipement de configuration local LACS 5 présente à l'équipement de configuration distant ACS 1 un modèle du réseau local. Un tel modèle peut notamment être architecturé selon les spécifications définies dans le rapport technique TR-106 du Broadband Forum et implémenté sous la forme d'une structure arborescente en langage XML. Un tel modèle présente à l'équipement de configuration distant ACS 1 l'ensemble des équipements locaux (D1, D2) du réseau local et des services (srv1, srv2) qu'ils offrent comme un seul équipement permettant à l' équipement de configuration distant ACS 1 d'administrer un certain nombre de services susceptibles d'être exécutés sur le réseau de communication local, comme illustré en **Figure 2b****.** Le modèle comprend notamment la description de ces services et permet de déterminer des commandes d'administration de ces services pouvant être exécutés par l'équipement de configuration distant ACS 1 sur le réseau de communication local, dites actes d'administration, ainsi que des paramètres associés que l'équipement de configuration distant ACS 1 peut lire et/ou modifier pour paramétrer lesdits services sur le réseau local. Ces paramètres permettent également à l'équipement de configuration distant de connaitre l'état d'un service. A titre d'exemple, si le réseau local comprend un boitier décodeur (« set top box », STB), le modèle du réseau local peut comprendre des champs présentant à l'équipement de configuration distant ACS 1 les services proposés par le boitier décodeur à un utilisateur du réseau local tels que les capacités de décodage vidéo, décodage audio et enregistrement du boitier décodeur. Un tel modèle comprend également d'autres champs présentant à l'équipement de configuration distant ACS 1 les paramètres d'administration de ces services, pour certains uniquement accessibles en lecture, tels que des indicateurs d'état de service ou des mesures de qualité de signal, et pour d'autres modifiables tels que des paramètres de fonctionnement du démodulateur du boitier décodeur ou des paramètres de surveillance du fonctionnement du boitier décodeur. Dans ce contexte, un acte d'administration de l'équipement de configuration distant ACS 1 peut consister en une commande de modification de paramètres du modèle accessibles en écriture afin par exemple de modifier le type de modulation utilisée pour la démodulation des signaux reçus, de déclencher un scan des chaines ou d'activer la collecte de données statistiques. L'exécution de ces actes d'administration sur le réseau local peut aussi bien n'impliquer qu'un seul équipement local que nécessiter la coopération de plusieurs équipements locaux, sans que l'équipement de configuration distant ACS 1 n'ait connaissance ni des équipements locaux 2 impliqués ni des actions mises en oeuvre par ces équipements. Le modèle peut aussi présenter à l'équipement de configuration distant 1 une liste des microcodes installés sur au moins un équipement local 2 du réseau de communication local 3.

Contrairement aux solutions d'administration existantes, la solution proposée permet à l'équipement de configuration distant ACS 1 d'administrer l'ensemble des équipements locaux 2 du réseau de communication local 3 sans avoir à se connecter à chacun d'eux au travers de la passerelle 4 du réseau. De plus, cette solution permet de ne pas avoir à implémenter de logique complexe de commande dans l'équipement de configuration distant 1 même lorsque différents équipements locaux 2 doivent coopérer pour l'exécution d'un acte d'administration d'un service. En effet, dans un tel cas l'équipement de configuration distant 1 n'a qu'à commander ledit acte d'administration à l'équipement de configuration local 5 et la complexité de la définition des multiples commandes à envoyer aux équipements locaux est déportée dans l'équipement de configuration local LACS 5, ce qui est plus simple à mettre en oeuvre puisque l'équipement de configuration local 5 est intégré au réseau de communication local 3 et ne participe à l'administration que d'un nombre restreint d'équipements 2.

La solution proposée permet également à l'équipement de configuration distant 1 de toujours disposer d'une vision globale de l'état de chaque service puisque l'équipement de configuration local 5 peut fournir une telle information même lorsque d'autres équipements locaux 2 du réseau de communication local 3 sont éteints ou injoignables.

Lors de la connexion au réseau de communication local 3 d'un nouvel équipement local 2 susceptible d'être impliqué dans l'exécution d'au moins un acte d'administration d'un service, l'équipement de configuration local 5 peut être configuré pour mettre à jour le modèle du réseau de communication local 3, en y ajoutant ou en mettant à jour ledit acte d'administration ainsi que des paramètres associés. Ceci permet à l'équipement de configuration distant 1 de déterminer les nouveaux paramètres associés à un acte d'administration existant et/ou qu'une nouvelle commande d'administration d'un service susceptible d'être exécuté sur le réseau de communication local 3 est disponible. Si cet équipement comporte un nouveau microcode, celui-ci est également ajouté à la liste des microcodes présentée dans le modèle.

La tâche de commander les actions des équipements locaux 2 du réseau local 3 pour l'exécution d'un acte d'administration incombe donc à l'équipement de configuration local LACS 5.

Plus précisément, suite à la réception, en provenance de l'équipement de configuration distant ACS 1, d'une commande d'administration d'un service susceptible d'être exécuté sur le réseau de communication local 3, dite acte d'administration, et inclus dans le modèle de données préalablement présenté à l'équipement de configuration distant 1, l'équipement de configuration local 5 détermine pour ladite commande une liste des équipements locaux 2 impliqués dans l'exécution dudit acte d'administration.

A titre d'exemple, l'équipement de configuration local 5 peut mémoriser une table de correspondance donnant pour chaque acte d'administration proposé dans le modèle de données du réseau local 3 les équipements locaux 2 impliqués dans l'exécution de cet acte d'administration. L'équipement de configuration local 5 peut lui-même figurer dans la liste s'il doit effectuer des actions autres que l'envoi de commandes pour que l'acte d'administration soit exécuté. L'équipement de configuration local 5 peut mémoriser l'association d'un microcode à chaque équipement local 2 du réseau de communication local 3, par exemple afin de déterminer les équipements concernés lors d'une mise à jour d'un microcode. De telles informations d'associations sont mises à jour lors de l'ajout d'un nouvel équipement au réseau local.

L'équipement de configuration local 5 transmet ensuite à chacun des équipements locaux 2 de ladite liste au moins une commande d'administration nécessaire à l'exécution dudit acte d'administration sur le réseau de communication local 3.

Lesdites commandes d'administration peuvent être des commandes conformes au protocole CWMP si celui-ci est supporté par un équipement local 2 ou bien à tout autre protocole de communication supporté par l'équipement de configuration local 5 et un équipement local 2. L'équipement de configuration local 5 joue le rôle de mandataire (« proxy ») pour les équipements du réseau local vis-à-vis de l'équipement de configuration distant 1 et peut à ce titre intégrer tous les moyens connus compris dans un serveur proxy pour traduire une commande exprimée selon un premier protocole dans le langage de communication d'un deuxième protocole.

Le procédé d'administration proposé peut être utilisé pour permettre à l'équipement de configuration distant 1 de réaliser les opérations d'administration du réseau local habituellement permises par le protocole CWMP à savoir :
- la configuration d'un service,
- l'installation et la mise à jour de microcodes (« firmware ») et de logiciels (« software »),
- le suivi des performances,
- le diagnostic des pannes.

### Configuration d'un service

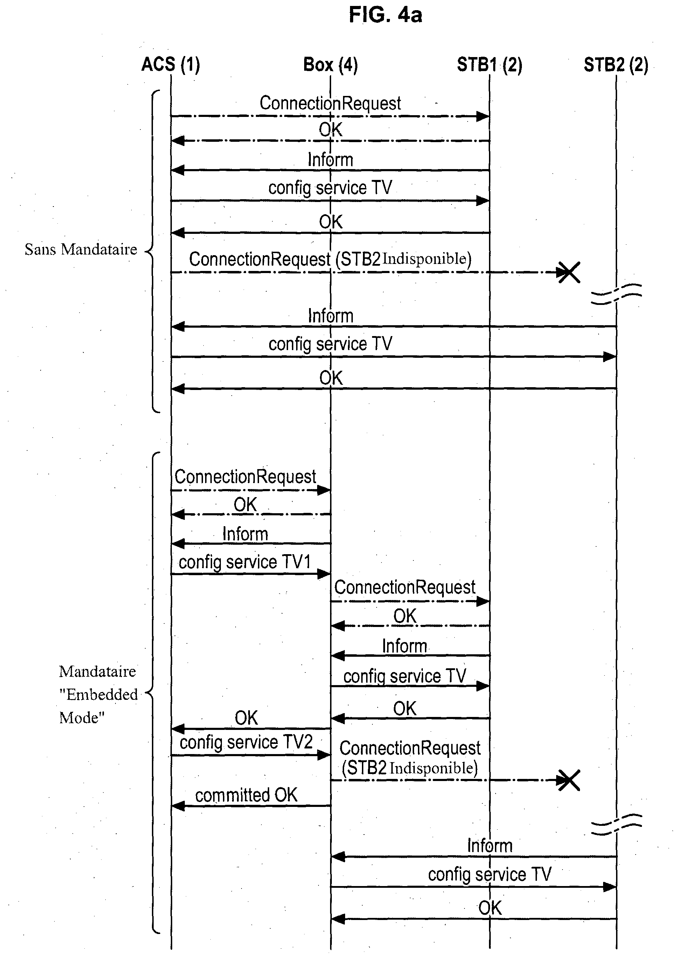

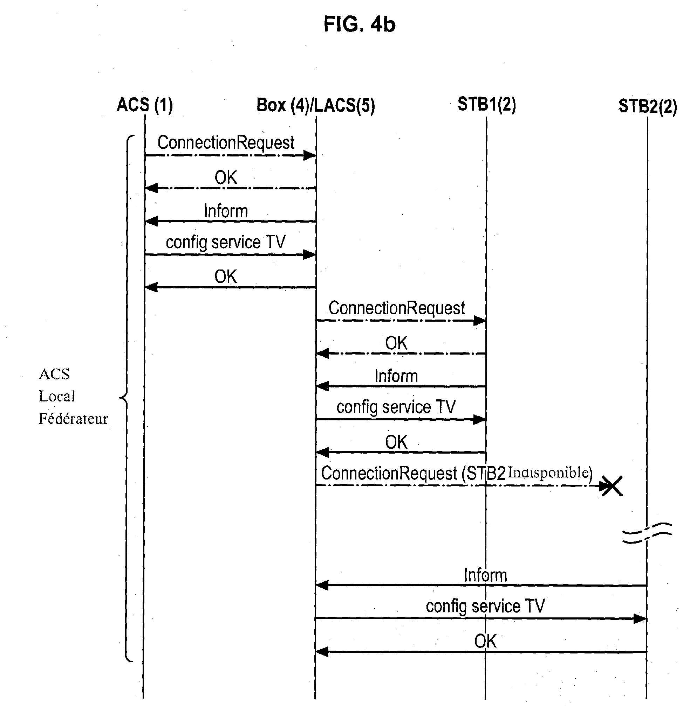

Un premier exemple de mise en oeuvre d'un procédé d'administration d'une pluralité d'équipements locaux 2 est illustré en référence aux **Figures 4a** **et** **4b****.** Ce premier exemple de mise en oeuvre illustre la configuration d'un service de télévision sur le réseau de communication local.

Pour réaliser cette configuration, une commande d'administration d'un service et plus précisément une commande de configuration d'un service (« config service TV ») sur le réseau de communication local est transmise par l'équipement de configuration distant 1 (ACS).

Comme représenté en **Figure 4a**, usuellement cette commande est transmise directement par l'équipement de configuration distant 1 à chacun des équipements locaux 2 impliqués dans l'exécution de ce service (STB1, STB2), de façon séparée, afin que ceux-ci configurent ce service. Dans le cas où ces équipements locaux STB1 et STB2 ne supportent pas le protocole CWMP, un mandataire (« serveur proxy ») peut être intercalé entre l'équipement de configuration distant 1 et chaque équipement local 2 qui ne sont alors présentés à l'équipement de configuration distant que par le service qu'ils rendent, selon le modèle « Embedded device ». L'équipement de configuration distant 1 transmet alors successivement au serveur proxy une commande de configuration pour chaque équipement local. Le serveur proxy transmet ensuite à chaque équipement local (STB1, STB2) une commande d'administration configurant le service (service TV) sur l'équipement local, ladite commande étant obtenue par traduction de la commande d'exécution de service selon le protocole CWMP dans le langage du protocole supporté par chaque équipement local, par exemple le protocole UPnP.

Comme représenté en **Figure 4b**, dans un mode de mise en oeuvre de l'invention, cette commande est transmise à l'équipement de configuration local 5. Ledit équipement de configuration local LACS 5 est alors configuré pour :
- déterminer pour ladite commande une liste des équipements locaux 2 à configurer (STB1, STB2),
- transmettre à chacun des équipements locaux 2 de ladite liste déterminée au moins une commande d'administration (« config service TV ») configurant ledit service sur lesdits équipements locaux 2.

La présence de l'équipement de configuration local 5 décharge l'équipement de configuration distant 1 et lui permet de n'avoir qu'un seul interlocuteur tout en limitant le nombre d'échanges pour réaliser une telle configuration d'un service sur le réseau de communication local. De plus, la transmission aux équipements locaux 2 des commandes d'administration peut être faite de manière désynchronisée et différée de façon à ce que l'exécution de ces commandes intervienne au moment le plus opportun, par exemple pour ne pas perturber la délivrance d'un service de télévision à l'utilisateur du réseau local 3.

### Mise à jour de microcode « firmware » et de logiciel « software »

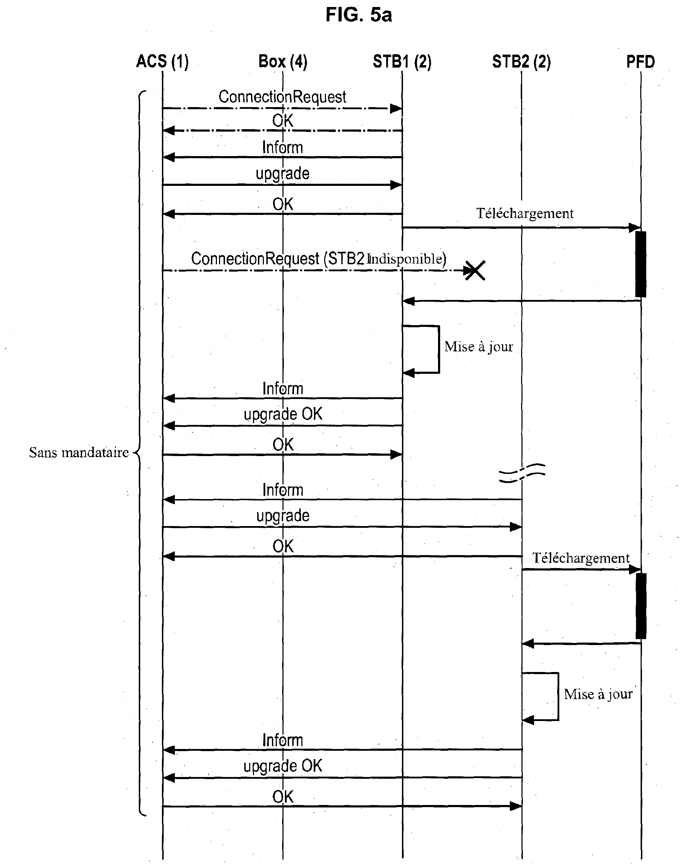

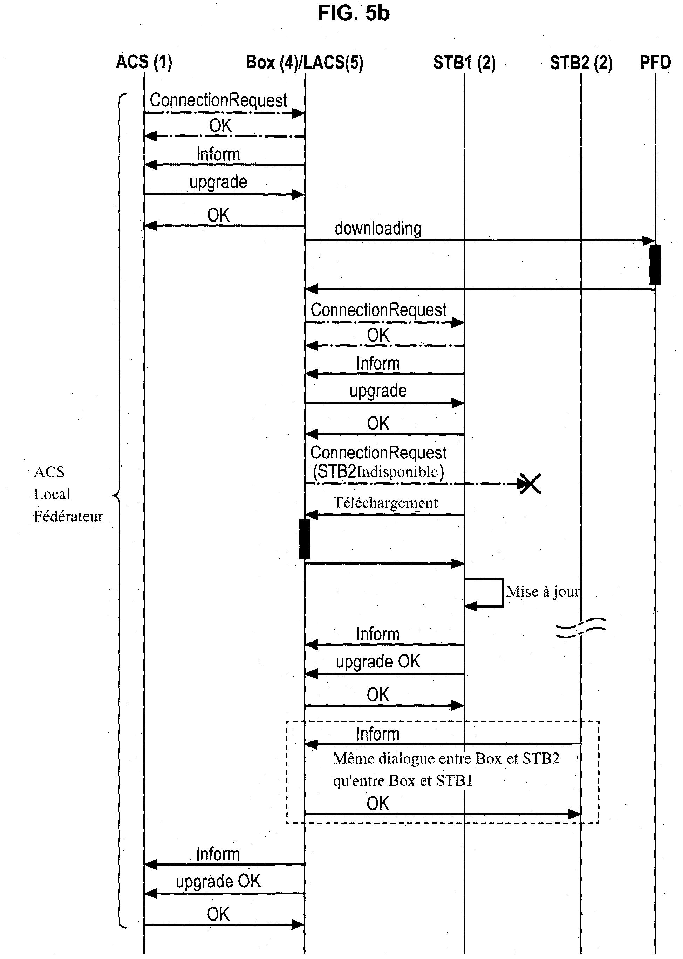

Un deuxième exemple de mise en oeuvre d'un procédé d'administration d'une pluralité d'équipements locaux 2 est illustré en référence aux Figures 5a et 5b. Ce deuxième exemple de mise en oeuvre illustre la mise à jour de microcode « firmware » et de logiciel « software » sur le réseau de communication local 3.

Pour réaliser une telle mise à jour, une commande d'administration d'un service et plus précisément une commande de mise à jour d'un logiciel ou d'un microcode (« upgrade ») sur le réseau de communication local 3 est transmise par l'équipement de configuration distant (ACS) 1.

Comme représenté en **Figure 5a****,** usuellement cette commande (« upgrade ») est transmise directement par l'équipement de configuration distant 1 à chacun des équipements locaux 2 (STB1, STB2) afin que ceux-ci réalisent le téléchargement du logiciel ou du microcode depuis une plateforme de téléchargement (PFD) en vue de leur mise à jour.

Comme représenté en **Figure 5b**, dans un mode de mise en oeuvre de l'invention, cette commande est transmise à l'équipement de configuration local 5 de sorte à ce que l'équipement de configuration distant 1 ne dialogue qu'avec un seul interlocuteur.

Ledit équipement de configuration local LACS 5 est alors configuré pour :
- déterminer pour ladite commande une liste des équipements locaux 2 sur lesquels sont installés le logiciel ou le microcode à mettre à jour (STB1, STB2).
- télécharger ledit logiciel ou ledit microcode,
- et transmettre à chacun des équipements locaux 2 de ladite liste déterminée (STB1, STB2) au moins une commande de mise à jour dudit logiciel ou dudit microcode.

Chacun des équipements locaux 2 peut ensuite télécharger et installer/mettre à jour le logiciel ou le microcode à partir dudit équipement de configuration local 5.

Ainsi un seul téléchargement à partir de la plateforme de téléchargement est requis, diminuant la bande passante consommée par l'ensemble des équipements locaux 2.

L'équipement de configuration local 5 peut utiliser l'information associant un microcode à chaque équipement local 2 du réseau de communication local 3, précédemment mémorisée, pour déterminer les équipements locaux 2 concernés par la mise à jour d'un microcode particulier.

Le téléchargement dudit logiciel ou dudit microcode par l'équipement de configuration local 5 ou par les équipements locaux 2 peut être réalisé lorsque ceux-ci disposent de la bande passante requise ou hors de périodes d'utilisation de ces équipements afin de réaliser des mises à jour sans gêner les utilisateurs (« silent upgrade »).

Alternativement, la décision d'appliquer une mise à jour peut être laissée au choix du réseau local 3 lui-même au lieu d'être pilotée par l'équipement de configuration distant 1. L'équipement de configuration local 5 peut alors comprendre des moyens lui permettant de surveiller la mise à disposition d'une mise à jour d'un microcode installé sur un ou plusieurs équipements locaux 2 du réseau de communication local 3. Suite à la détection de la disponibilité d'une telle mise à jour, l'équipement de configuration local 5 exécute alors les actions décrites ci-dessus de détermination des équipements locaux 2 concernés, de téléchargement et d'envoi de commandes de mise à jour aux équipements locaux.

### Suivi des performances et diagnostic des pannes

L'acte d'administration d'un service commandé par l'équipement de configuration distant 1 à l'équipement de configuration local 5 peut être une commande de suivi des performances du réseau local ou de diagnostic d'une panne ayant lieu dans celui-ci.

L'équipement de configuration local 5 peut alors être configuré pour envoyer aux équipements locaux 2 du réseau de communication local des commandes d'administration lui permettant d'interroger ces équipements afin d'obtenir des informations caractérisant l'état des équipements du réseau local. Ces informations permettent à l'équipement de configuration local 5 d'estimer les performances du réseau, par exemple vis-à-vis de l'exécution d'un service, et de diagnostiquer une panne pouvant affecter un ou plusieurs des équipements locaux. De telles informations peuvent par exemple consister en des mesures de débit, des temps de réponse, un état de disponibilité, des paramètres physiques tels que des températures ou des vitesses de rotation de ventilateurs, des éventuels codes d'erreur consécutifs à l'exécution d'une commande etc.

A titre d'exemple, un opérateur peut souhaiter mettre en place une surveillance des problèmes de connectivité dans le réseau local 3 et obtenir périodiquement un rapport à ce sujet, par exemple suite à un signalement par un utilisateur de défauts de fonctionnement. L'équipement de configuration distant 1 transmet alors à l'équipement de configuration local 5 une commande de configuration d'un ou plusieurs mécanismes de surveillance et de rapport proposés dans le modèle du réseau local 3. De telles commandes peuvent consister en la modification des valeurs de différents paramètres du modèle codant l'activation de tests de diagnostic de l'état du réseau et codant la période pendant laquelle de tels tests sont réalisés. En réaction à ces commandes, l'équipement de configuration local 5 détermine les commandes d'administration à envoyer aux équipements locaux 2 pour exécuter les actes d'administration commandés par l'équipement de configuration distant 1. Selon les équipements locaux 2, l'équipement de configuration local 5 peut choisir :
- de ne réaliser aucune action supplémentaire car il est déjà en communication régulière avec ces équipements locaux et dispose des informations nécessaires les concernant,
- de modifier la fréquence à laquelle il communique avec certains équipements locaux,
- de tenter périodiquement de joindre certains équipements locaux pour s'assurer lui-même de leur disponibilité,
- d'envoyer à certains équipements locaux une commande d'administration leur demandant l'envoi à intervalle régulier d'un rapport de connectivité.

### Gestion de services complexes

Puisque les actes d'administrations exposés dans le modèle de données peuvent nécessiter pour leur exécution l'action conjointe de plusieurs équipements locaux 2 du réseau de communication local 3, le procédé proposé peut être employé pour commander l'exécution d'actes d'administration complexes sur l'ensemble du réseau local 3, sans nécessiter une implémentation complexe du côté de l'équipement de configuration distant.

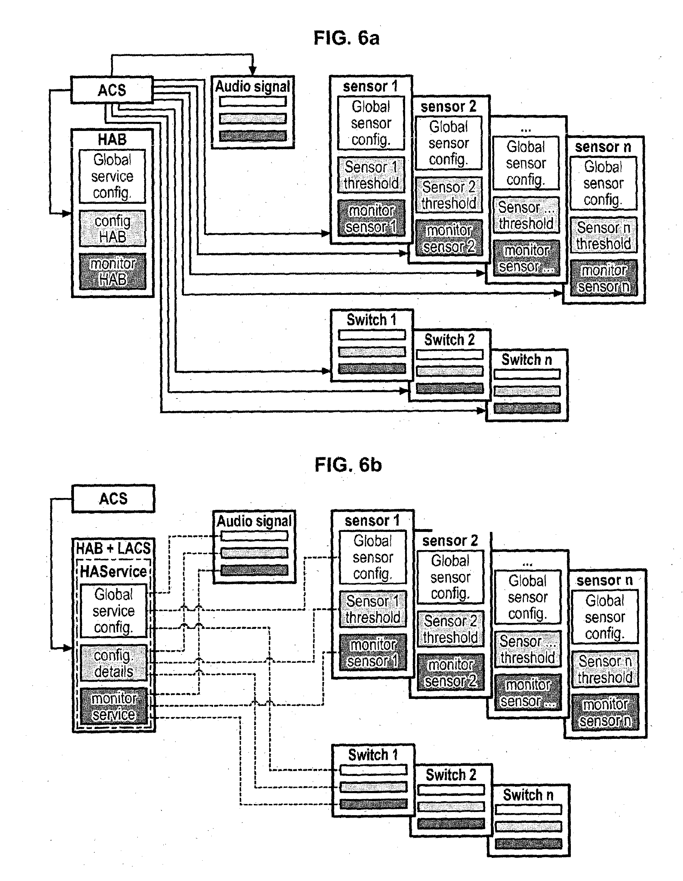

A titre d'exemple, l'équipement de configuration local peut être utilisé pour proposer à un utilisateur une plateforme d'administration distante lui permettant d'administrer un service de domotique dans une habitation comme représenté en **Figure 6b****.** Dans le cadre d'un réseau domotique, les équipements locaux consistent en des capteurs, des interrupteurs, une alarme... Ces équipements peuvent être actionnés et collectent des données de surveillance.

Contrairement à une utilisation classique de CWMP, représentée en **Figure 6a** et dans laquelle l'équipement de configuration distant 1 doit être connecté séparément à chacun des équipements locaux 2, un équipement de configuration local 5 peut être intégré dans la passerelle du réseau ou dans un serveur HAB (« Home Automation Box ») comme représenté en **Figure 6b****.** L'équipement de configuration local 5 présente dans le modèle du réseau local 3 des paramètres permettant de consulter des statistiques de fonctionnement des équipements locaux, de vérifier l'état de l'ensemble des capteurs, et de commander l'exécution d'actes d'administration tels que l'activation ou la désactivation du pilotage des volets par le service de domotique. De ce fait, le portail d'administration hébergé sur l'équipement de configuration distant 1 est beaucoup plus simple à réaliser que dans la variante exposée en Figure 6a puisque l'équipement de configuration distant 1 n'est connecté qu'au serveur HAB et n'a pas à piloter l'exécution de commandes d'administration sur plusieurs équipements à la fois.

## Revendications

1. Procédé d'administration d'une pluralité d'équipements locaux (2) connectés à un réseau de communication local (3),
**caractérisé en ce qu'**en ce qu'il comprend les étapes suivantes mises en oeuvre par un équipement de configuration local LACS (5) apte à être connecté d'une part au réseau de communication local (3) et d'autre part à un équipement de configuration distant ACS (1) :
a) recevoir de l'équipement de configuration distant ACS (1) une commande pour administrer un acte d'administration, ledit acte d'administration comprenant un service susceptible d'être exécuté sur le réseau de communication local (3),
b) suite à la réception de ladite commande en provenance de l'équipement de configuration distant (1), déterminer pour ledit acte d'administration une liste de plusieurs équipements locaux (2) impliqués dans l'exécution dudit acte d'administration, ledit acte d'administration étant inclus dans un modèle du réseau de communication local (3),
c) transmettre à chacun des équipements locaux (2) de ladite liste déterminée au moins une commande d'administration nécessaire à l'exécution dudit acte d'administration sur le réseau de communication local (3),
d) ledit équipement de configuration local LACS (5) mettant à disposition de l'équipement de configuration distant ACS (1) le modèle du réseau de communication local permettant à l'équipement de configuration distant ACS (1) de déterminer des actes d'administration de services susceptibles d'être exécutés sur le réseau de communication local (3), et des paramètres associés,
e) ledit modèle présentant à l'équipement de configuration distant ACS (1) l'ensemble des équipements locaux (2) du réseau local (3) et des services offerts comme un seul équipement.

2. Procédé d'administration selon la revendication 1, dans lequel ledit équipement de configuration local LACS (5) associe un microcode à chaque équipement local (2) du réseau de communication local (3).

3. Procédé d'administration selon la revendication 1, dans lequel lors de la connexion au réseau de communication local (3) d'un nouvel équipement local (2) susceptible d'être impliqué dans l'exécution d'au moins un acte d'administration, ledit équipement de configuration local LACS (5) met à jour le modèle du réseau de communication local pour permettre à l'équipement de configuration distant ACS (1) de disposer d'une mise à jour des actes d'administration des services susceptibles d'être exécutés sur le réseau de communication local (3) et des paramètres associés.

4. Procédé d'administration selon la revendication 1, dans lequel l'exécution de l'acte d'administration déclenche une installation ou une mise à jour d'un logiciel ou d'un microcode, une configuration d'un service, un suivi de l'état des performances et/ou un diagnostic d'une panne d'un ou plusieurs équipements locaux (2) du réseau de communication local (3).

5. Procédé d'administration selon la revendication 1, dans lequel lorsque l'acte d'administration d'un service est une commande d'installation ou de mise à jour d'un logiciel ou d'un microcode sur le réseau de communication local (3), ledit équipement de configuration local LACS (5) télécharge ledit logiciel ou ledit microcode, et ladite au moins une commande d'administration nécessaire à l'exécution dudit acte d'administration comprend une commande de téléchargement à partir dudit équipement de configuration local (5) et d'installation dudit logiciel ou dudit microcode, transmise aux équipements locaux (2) sur lesquels l'installation ou la mise à jour dudit logiciel ou dudit microcode est requise.

6. Procédé d'administration selon la revendication 1, dans lequel lorsque l'acte d'administration d'un service est une commande de configuration d'un service, ladite au moins une commande d'administration nécessaire à l'exécution dudit acte d'administration est une commande d'administration configurant ledit service sur les équipements locaux (2) de la liste déterminée.

7. Procédé d'administration selon la revendication 1, dans lequel la connexion entre l'équipement de configuration local LACS (5) et l'équipement de configuration distant ACS (1) est sécurisée.

8. Procédé d'administration selon la revendication 1, dans lequel l'équipement de configuration local LACS (5) est intégré dans une passerelle (4) du réseau de communication local (3).

9. Produit programme d'ordinateur comprenant des instructions de code pour l'exécution d'un procédé d'administration d'une pluralité d'équipements locaux (2) selon la revendication 1 lorsque ce programme est exécuté par un processeur.

10. Equipement de configuration local LACS (5) apte à être connecté à un réseau de communication local (3) et à un équipement de configuration distant ACS (1) et configuré pour:
- recevoir de l'équipement de configuration distant ACS (1) une commande pour administrer un acte d'administration, ledit acte d'administration comprenant un service susceptible d'être exécuté sur le réseau de communication local (3),
- suite à la réception de ladite commande en provenance de l'équipement de configuration distant (1), déterminer pour ledit acte d'administration une liste de plusieurs équipements locaux (2) impliqués dans l'exécution dudit acte d'administration, ledit acte d'administration étant inclus dans un modèle du réseau de communication local (3),
- transmettre à chacun des équipements locaux (2) de ladite liste déterminée au moins une commande d'administration nécessaire à l'exécution dudit acte d'administration sur le réseau de communication local (3), ledit équipement de configuration local LACS (5) mettant à disposition de l'équipement de configuration distant ACS (1) le modèle du réseau de communication local permettant à l'équipement de configuration distant ACS (1) de déterminer des actes d'administration de services susceptibles d'être exécutés sur le réseau de communication local (3), et des paramètres associés, ledit modèle présentant à l'équipement de configuration distant ACS (1) l'ensemble des équipements locaux (2) du réseau local (3) et des services offerts comme un seul équipement.

11. Passerelle (4) apte à être connectée à un réseau de communication local (3) et comprenant un équipement de configuration local LACS (5) selon la revendication 10.

## Patentansprüche

1. Verfahren zum Verwalten einer Vielzahl von lokalen Vorrichtungen (2), die mit einem lokalen Kommunikationsnetzwerk (3) verbunden sind,
**dadurch gekennzeichnet, dass** es die folgenden Schritte beinhaltet, die durch eine lokale Konfigurationsvorrichtung LACS (5) umgesetzt werden, die dazu fähig ist, einerseits mit dem lokalen Kommunikationsnetzwerk (3) und andererseits mit einer entfernten Konfigurationsvorrichtung ACS (1) verbunden zu sein:
a) Empfangen, von der entfernten Konfigurationsvorrichtung ACS (1), eines Befehls zum Verwalten einer Verwaltungsprozedur, wobei die Verwaltungsprozedur einen Dienst beinhaltet, der in dem lokalen Kommunikationsnetzwerk (3) ausgeführt werden kann,
b) im Anschluss an den Empfang des Befehls von der entfernten Konfigurationsvorrichtung (1), Bestimmen, für die Verwaltungsprozedur, einer Liste mehrerer lokaler Vorrichtungen (2), die an der Ausführung der Verwaltungsprozedur beteiligt sind, wobei die Verwaltungsprozedur in einem Modell des lokalen Kommunikationsnetzwerks (3) enthalten ist,
c) Übertragen, an jede der lokalen Vorrichtungen (2) der bestimmten Liste, mindestens eines Verwaltungsbefehls, der für die Ausführung der Verwaltungsprozedur in dem lokalen Kommunikationsnetzwerk (3) erforderlich ist,
d) wobei die lokale Konfigurationsvorrichtung LACS (5) der entfernten Konfigurationsvorrichtung ACS (1) das Modell des lokalen Kommunikationsnetzwerks bereitstellt, welches es der entfernten Konfigurationsvorrichtung ACS (1) ermöglicht, Verwaltungsprozeduren für Dienste, die in dem lokalen Kommunikationsnetzwerk (3) ausgeführt werden können, und damit assoziierte Parameter zu bestimmen,
e) wobei das Modell der entfernten Konfigurationsvorrichtung ACS (1) die Gesamtheit der lokalen Vorrichtungen (2) des lokalen Netzwerks (3) und der angebotenen Dienste wie eine einzige Vorrichtung präsentiert.

2. Verwaltungsverfahren nach Anspruch 1, wobei die lokale Konfigurationsvorrichtung LACS (5) jeder lokalen Vorrichtung (2) des lokalen Kommunikationsnetzwerks (3) eine Firmware zuordnet.

3. Verwaltungsverfahren nach Anspruch 1, wobei anlässlich des Verbindens einer neuen lokalen Vorrichtung (2), die an der Ausführung mindestens einer Verwaltungsprozedur beteiligt sein kann, mit dem lokalen Kommunikationsnetzwerk (3) die lokale Konfigurationsvorrichtung LACS (5) das Modell des lokalen Kommunikationsnetzwerks aktualisiert, um es der entfernten Konfigurationsvorrichtung ACS (1) zu ermöglichen, über eine Aktualisierung der Verwaltungsprozeduren für die Dienste, die in dem lokalen Kommunikationsnetzwerk (3) ausgeführt werden können, und der damit assoziierten Parameter zu verfügen.

4. Verwaltungsverfahren nach Anspruch 1, wobei die Ausführung der Verwaltungsprozedur eine Installation oder eine Aktualisierung einer Software oder einer Firmware, eine Konfiguration eines Dienstes, eine Nachverfolgung von Leistungen und/oder eine Diagnose eines Ausfalls einer oder mehrerer lokaler Vorrichtungen (2) des lokalen Kommunikationsnetzwerks (3) auslöst.

5. Verwaltungsverfahren nach Anspruch 1, wobei, wenn die Verwaltungsprozedur für einen Dienst ein Befehl zur Installation oder Aktualisierung einer Software oder einer Firmware in dem lokalen Kommunikationsnetzwerk (3) ist, die lokale Konfigurationsvorrichtung LACS (5) die Software oder die Firmware herunterlädt und der mindestens eine Verwaltungsbefehl, der für die Ausführung der Verwaltungsprozedur erforderlich ist, einen Befehl zum Herunterladen, aus der lokalen Konfigurationsvorrichtung (5), und zur Installation der Software oder der Firmware beinhaltet, der an die lokalen Vorrichtungen (2) übertragen wird, in denen die Installation oder die Aktualisierung der Software oder der Firmware erforderlich ist.

6. Verwaltungsverfahren nach Anspruch 1, wobei, wenn die Verwaltungsprozedur für einen Dienst ein Befehl zur Konfiguration eines Dienstes ist, der mindestens eine Verwaltungsbefehl, der für die Ausführung der Verwaltungsprozedur erforderlich ist, ein Verwaltungsbefehl ist, der den Dienst in den lokalen Vorrichtungen (2) der bestimmten Liste konfiguriert.

7. Verwaltungsverfahren nach Anspruch 1, wobei die Verbindung zwischen der lokalen Konfigurationsvorrichtung LACS (5) und der entfernten Konfigurationsvorrichtung ACS (1) gesichert ist.

8. Verwaltungsverfahren nach Anspruch 1, wobei die lokale Konfigurationsvorrichtung LACS (5) in ein Gateway (4) des lokalen Kommunikationsnetzwerks (3) integriert ist.

9. Computerprogrammprodukt, das Codeanweisungen zur Ausführung eines Verfahrens zum Verwalten einer Vielzahl von lokalen Vorrichtungen (2) nach Anspruch 1 beinhaltet, wenn dieses Programm durch einen Prozessor ausgeführt wird.

10. Lokale Konfigurationsvorrichtung LACS (5), die dazu fähig ist, mit einem lokalen Kommunikationsnetzwerk (3) und einer entfernten Konfigurationsvorrichtung ACS (1) verbunden zu sein, und zu Folgendem konfiguriert ist:
- Empfangen, von der entfernten Konfigurationsvorrichtung ACS (1), eines Befehls zum Verwalten einer Verwaltungsprozedur, wobei die Verwaltungsprozedur einen Dienst beinhaltet, der in dem lokalen Kommunikationsnetzwerk (3) ausgeführt werden kann,
- im Anschluss an den Empfang des Befehls von der entfernten Konfigurationsvorrichtung (1), Bestimmen, für die Verwaltungsprozedur, einer Liste mehrerer lokaler Vorrichtungen (2), die an der Ausführung der Verwaltungsprozedur beteiligt sind, wobei die Verwaltungsprozedur in einem Modell des lokalen Kommunikationsnetzwerks (3) enthalten ist,
- Übertragen, an jede der lokalen Vorrichtungen (2) der bestimmten Liste, mindestens eines Verwaltungsbefehls, der für die Ausführung der Verwaltungsprozedur in dem lokalen Kommunikationsnetzwerk (3) erforderlich ist, wobei die lokale Konfigurationsvorrichtung LACS (5) der entfernten Konfigurationsvorrichtung ACS (1) das Modell des lokalen Kommunikationsnetzwerks bereitstellt, welches es der entfernten Konfigurationsvorrichtung ACS (1) ermöglicht, Verwaltungsprozeduren für Dienste, die in dem lokalen Kommunikationsnetzwerk (3) ausgeführt werden können, und damit assoziierte Parameter zu bestimmen, wobei das Modell der entfernten Konfigurationsvorrichtung ACS (1) die Gesamtheit der lokalen Vorrichtungen (2) des lokalen Netzwerks (3) und der angebotenen Dienste wie eine einzige Vorrichtung präsentiert.

11. Gateway (4), das dazu fähig ist, mit einem lokalen Kommunikationsnetzwerk (3) verbunden zu sein, und eine lokale Konfigurationsvorrichtung LACS (5) nach Anspruch 10 beinhaltet.

## Claims

1. Method for administering a plurality of local equipments (2) connected to a local communication network (3),
**characterized in that** it comprises the following steps implemented by LACS local configuration equipment (5) able to be connected on the one hand to the local communication network (3) and on the other hand to ACS remote configuration equipment (1):
a) receiving from the ACS remote configuration equipment (1) a command to administer an act of administration, said act of administration comprising a service capable of being executed on the local communication network (3),
b) following the reception of said command from the remote configuration equipment (1), determining for said act of administration a list of a number of local equipments (2) involved in the execution of said act of administration, said act of administration being included in a model of the local communication network (3),
c) transmitting to each of the local equipments (2) of said determined list at least one administration command necessary for the execution of said act of administration on the local communication network (3),
d) said LACS local configuration equipment (5) making available to the ACS remote configuration equipment (1) the model of the local communication network allowing the ACS remote configuration equipment (1) to determine acts of administration of services capable of being executed on the local communication network (3), and associated parameters,
e) said model showing to the ACS remote configuration equipment (1) all of the local equipments (2) of the local network (3) and the services offered as a single piece of equipment.

2. Administration method according to Claim 1, wherein said LACS local configuration equipment (5) associates a microcode with each piece of local equipment (2) of the local communication network (3).

3. Administration method according to Claim 1, wherein when a new piece of local equipment (2) capable of being involved in the execution of at least one act of administration is connected to the local communication network (3), said LACS local configuration equipment (5) updates the model of the local communication network so as to allow the ACS remote configuration equipment (1) to have an update of the acts of administration of the services capable of being executed on the local communication network (3) and of the associated parameters.

4. Administration method according to Claim 1, wherein the execution of the act of administration triggers installation or updating of software or of a microcode, configuration of a service, monitoring of the performance state and/or diagnosis of a failure of one or more local equipments (2) of the local communication network (3).

5. Administration method according to Claim 1, wherein when the act of administration of a service is a command to install or to update software or a microcode on the local communication network (3), said LACS local configuration equipment (5) downloads said software or said microcode, and said at least one administration command necessary for the execution of said act of administration comprises a command to download from said local configuration equipment (5) and to install said software or said microcode, said administration command being transmitted to the local equipments (2) on which the installation or the update of said software or of said microcode is required.

6. Administration method according to Claim 1, wherein when the act of administration of a service is a command to configure a service, said at least one administration command necessary for the execution of said act of administration is an administration command configuring said service on the local equipments (2) of the determined list.

7. Administration method according to Claim 1, wherein the connection between the LACS local configuration equipment (5) and the ACS remote configuration equipment (1) is secure.

8. Administration method according to Claim 1, wherein the LACS local configuration equipment (5) is integrated in a gateway (4) of the local communication network (3).

9. Computer program product comprising code instructions for the execution of a method for administering a plurality of local equipments (2) according to Claim 1 when this program is executed by a processor.

10. LACS local configuration equipment (5) able to be connected to a local communication network (3) and to ACS remote configuration equipment (1) and configured to:
- receive from the ACS remote configuration equipment (1) a command to administer an act of administration, said act of administration comprising a service capable of being executed on the local communication network (3),
- following the reception of said command from the remote configuration equipment (1), determining for said act of administration a list of a number of local equipments (2) involved in the execution of said act of administration, said act of administration being included in a model of the local communication network (3),
- transmitting to each of the local equipments (2) of said determined list at least one administration command necessary for the execution of said act of administration on the local communication network (3), said LACS local configuration equipment (5) making available to the ACS remote configuration equipment (1) the model of the local communication network allowing the ACS remote configuration equipment (1) to determine acts of administration of services capable of being executed on the local communication network (3), and associated parameters, said model showing to the ACS remote configuration equipment (1) all of the local equipments (2) of the local network (3) and the services offered as a single piece of equipment.

11. Gateway (4) able to be connected to a local communication network (3) and comprising LACS local configuration equipment (5) according to Claim 10.
